# EUROPEAN PATENT SPECIFICATION

(11) **EP 3 224 094 B1**
(45) Date of publication and mention of the grant of the patent: **02.01.2019**
(21) Application number: 15813567.3
(22) Date of filing: 17.11.2015
(51) Int. Cl.: B60S 3/00, A47L 5/38

(54) **CENTRAL VACUUM SYSTEM AND ITS USE**
ZENTRALE STAUBSAUGEINRICHTUNG UND VERFAHREN
SYSTÈME D'ASPIRATION ET SON UTILISATION

(30) Priority: 28.11.2014 BE 201400827
(43) Date of publication of application: 04.10.2017
(73) Proprietor: Ergox Bvba, 3680 Maaseik (BE)
(72) Inventor: MUYTERS, Peter, B-3680 Maaseik (BE)
(74) Representative: Van hunsel, Lieven M.S.
(86) International application number: PCT/IB2015/058875
(87) International publication number: WO 2016/083939

(56) References cited:
- WO-A1-2010/122587
- WO-A1-2011/050449
- DE-A1-102004 060 774
- DE-U1-202005 020 155

## Description

The present invention concerns a central vacuum system.

In particular, the present invention concerns such a central vacuum system provided with a central pump installation and a dust collection unit and whereby several suction hoses are connected to the central pump installation via a pipe system.

Such a central vacuum system may be typically used for example in a cleaning installation for vehicles, whereby the purpose is that several individuals can each simultaneously vacuum the interior of a vehicle.

In such a central vacuum system according to the invention, each suction hose is further provided with a suction nozzle on one far end which, after having vacuumed with the suction hose concerned, must be placed in a suction nozzle holder and which, before vacuuming with the suction hose concerned, must be taken out of the suction nozzle holder.

Such central vacuum systems are already known, but they represent a number of disadvantages.

The major disadvantage of the known central vacuum systems is that they consume a lot of energy.

Also, the present invention aims to remedy the above-mentioned and/or other disadvantages.

To this end, the present invention concerns a central vacuum system provided with a central pump installation and a dust collection unit, whereby several suction hoses are connected to the central pump installation via a pipe system, whereby every suction hose is provided with a suction nozzle on one far end which, after having vacuumed with the suction hose concerned, must be placed in a suction nozzle holder and which, before vacuuming with the suction hose concerned, must be removed from the suction nozzle holder, and whereby the central vacuum system contains at least the following elements:
- a detection system for detecting whether a suction nozzle is either or not placed in its corresponding suction nozzle holder, in an unused condition and a used condition respectively of the suction hose concerned; and,
- a control unit which is connected to the detection system in order to know the number of suction hoses being currently used, whereby the control unit controls the suction force of the central pump installation as a function of the number of suction hoses being currently used.

Document WO 2011/050449 A1 discloses a central vacuum system according to the preamble of claim 1.

A first major advantage of such a central vacuum system according to the invention is that it is provided with a detection system with which the presence of the suction nozzles of the central vacuum system in their corresponding suction nozzle holders can be detected directly, which allows to control several elements of the vacuum system in an accurate and suitable way by means of the control unit of the central vacuum system, for example in view of a more optimal energy consumption.

Another major advantage of such a vacuum system in accordance with the invention is that the detection system makes it possible to know the number of suction hoses being currently used, and that the control unit controls the suction force of the central pump installation depending on this number.

Thus can be obtained a first major energy saving, since the control unit can control the central pump installation in such a way that only the minimum required power is consumed which is necessary to generate sufficient suction force for the suction hoses being currently used.

According to a preferred embodiment of a central vacuum system according to the invention, the control unit is made such to that end that the central pump installation will be switched off when no suction hoses are being used, and the pump capacity will be proportionally or gradually increased, reduced respectively by the control unit as the number of suction hoses being used increases, decreases respectively.

In this way is obtained a large energy saving with respect to the known central vacuum systems.

Indeed, the known central vacuum systems are usually started up and stopped by a competent operator.

It is common thereby that said operator starts up the central pump installation of such a known central vacuum system at the beginning of the operations, for example in the morning when a carwash is opened, whereby the operator will not stop the central pump installation until the operations cease, for example at night when the carwash is closed.

Thus, energy has to be continuously supplied to the central pump installation, regardless of the fact whether anyone is using the central vacuum system or not.

The powers referred to in such central vacuum systems add up quickly from about 15 kW to about 50 kW, depending on their size.

In some newer, known central vacuum systems, however, a control is provided to make the central pump installation rotate at its lowest possible power when no one is using the central vacuum system.

Nevertheless, this type of known central vacuum systems still consume a lot of energy (typically some 15kW) when there is hardly or not any vacuuming.

This problem is solved with a central vacuum system according to the invention.

According to a preferred embodiment of a central vacuum system in accordance with the invention, the central pump installation has several electrically driven vacuum pumps, whereby the control unit switches on additional vacuum pumps as the number of suction hoses being used increases, and whereby vice versa, the control unit switches off vacuum pumps as the number of suction hoses being used decreases.

Such an embodiment of a central vacuum system according to the invention offers a major advantage in that the suction force and the power consumed by its central pump installation can be increased or reduced in small steps, which again makes it possible to make the energy consumption of the central vacuum system much more responsive to the needs of the moment in terms of the number of suction hoses being used.

According to another preferred embodiment of a vacuum system in accordance with the invention, a pressure sensor is provided in one or several suction hoses or in one or several parts of the pipe system which generates a pressure signal for the control unit, whereby the control unit controls the rotational speed of the vacuum pumps of the central pump installation on the basis of this pressure signal or pressure signals.

A major advantage of this embodiment of a vacuum installation in accordance with the invention is that the pump capacity of the central pump installation can be adjusted without switching on or off any additional vacuum pumps.

In this manner, with only a minimal modification of the number of suction hoses being used, more specifically a modification that does not require an additional start-up or shutdown of any one of the vacuum pumps of the central vacuum system, the suction force of the central pump installation will nevertheless be adjusted as a function of the number of suction hoses being used in order to optimally adapt the energy consumption to the required suction force.

According to yet another preferred embodiment of a central vacuum system in accordance with the invention, the central vacuum system comprises a sealing system with which the air flow through each of the suction hoses can be hermetically sealed as separate.

Such a sealing system preferably comprises a seal for each suction hose with which the suction hose concerned or a connecting part of the pipe system can be hermetically sealed.

The seals are preferably controlled seals and the sealing system is controlled by the control unit on the basis of data derived from the detection system, in such a way that when a condition is detected wherein a suction nozzle is placed in its relative suction nozzle holder, more specifically in a non-used condition of the suction hose concerned, the corresponding controlled seal will be closed, and wherein vice versa, when a condition is detected wherein a suction nozzle is removed from its relative suction nozzle holder, more specifically in a used condition of the suction hose concerned, the corresponding controlled seal will be opened.

Such an embodiment of a central vacuum system according to the invention has an increased efficiency compared to the known central vacuum systems.

Indeed, a major disadvantage of the known central vacuum systems consists in that their efficiency leaves much to be desired, since the pipe system which is connected to the non-used suction hoses is often insufficiently sealed.

This may be the result for example of an incorrect operation of the user, for example when the user has replaced the suction nozzle incorrectly or has not replaced it at all in the suction nozzle holder after use of the suction hose concerned.

On the other hand, in many cases, even when a suction nozzle has been placed correctly in the suction nozzle holder, air may still flow through tiny cracks and crevices.

This implies that in the known central vacuum systems, suction hoses which are not being used for vacuuming often still draw air.

As a consequence, the central pump installation in such a known central vacuum system will have to generate a greater suction force than is the case when no leaks or cracks are present, since a normal air intake must be obtained for the suction hoses in use, as well as a useless air intake through the cracks and crevices of the suction hoses which are not in use.

Naturally, this involves a loss of energy.

In the latter embodiment of a central vacuum system according to the invention, this is no longer the case, since it is provided with a sealing system with which the suction hoses which are not in use are hermetically sealed.

The present invention also concerns the use of a central vacuum system in accordance with the invention in an installation for cleaning vehicles, such as for example in a carwash.

In order to better explain the characteristics of the invention, the following preferred embodiment of a central vacuum system according to the invention is described by way of example only without being limitative in any way, with reference to the accompanying drawings, in which:
figure 1 is a plan view of an application of a central vacuum system according to the invention in a cleaning installation for vehicles;
figure 2 represents a side view according to arrow F2 on a portion of the central vacuum system from figure 1 to a larger scale;
figure 3 represents the part indicated by F3 in figure 2 in perspective and on an even larger scale;
figure 4 is a plan view of the part from figure 1 indicated by F4 to a larger scale, more specifically the part of the vacuum system which is arranged inside a building;
figure 5 shows a view in perspective according to arrow F5 of the parts of the central vacuum system represented in figure 4; and,
figure 6 is a schematic representation to illustrate a possible embodiment of a control unit of the central vacuum system from the preceding figures.

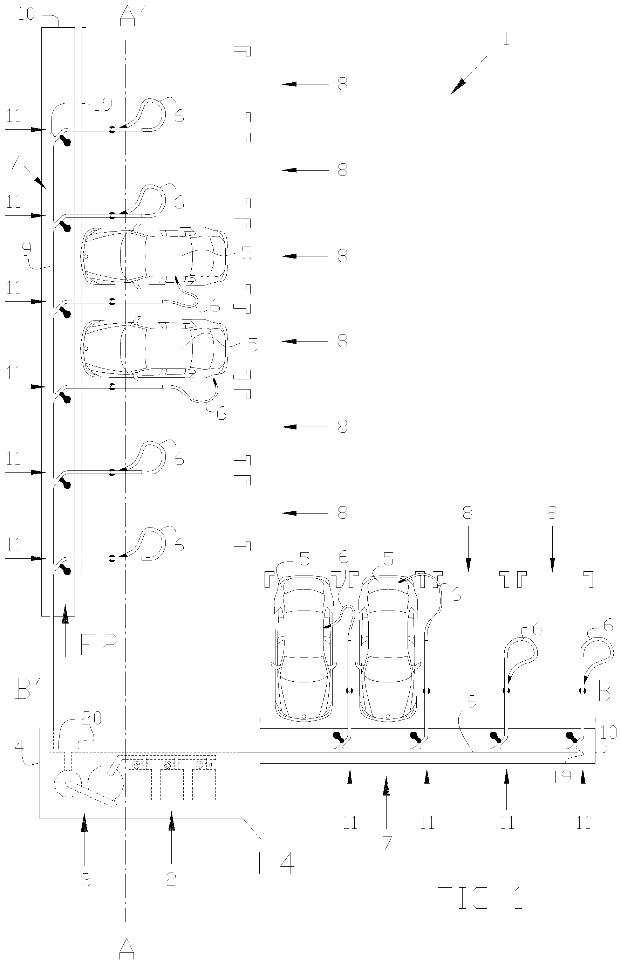

First and foremost, the central vacuum system 1 represented in figure 1 is provided with a central pump installation 2 and a dust collection unit 3, which are arranged for example inside a building 4.

The central vacuum system 1 is designed to make it possible to simultaneously clean several vehicles 5, and to that end it is equipped with several suction hoses 6 which are connected to the central pump installation 2 via a pipe system 7.

In the given example, pitches 8 are provided for the vehicles 5 in two directions AA' and BB' extending at right angles to each other.

More specifically, there are six adjacent pitches 8 in the direction AA' in this case and four adjacent pitches 8 in the direction BB'.

The pipe system 7 contains two main pipes 9 extending in gutters 10 according to the directions AA' and BB', and which come together at the central pump installation 2.

At each individual pitch 8, the main pipes 9 are in each case provided with a branch 11, a portion 12 of which in this case extends as of a concrete base 13 in the ground 14 up to a certain height above the vehicles 5.

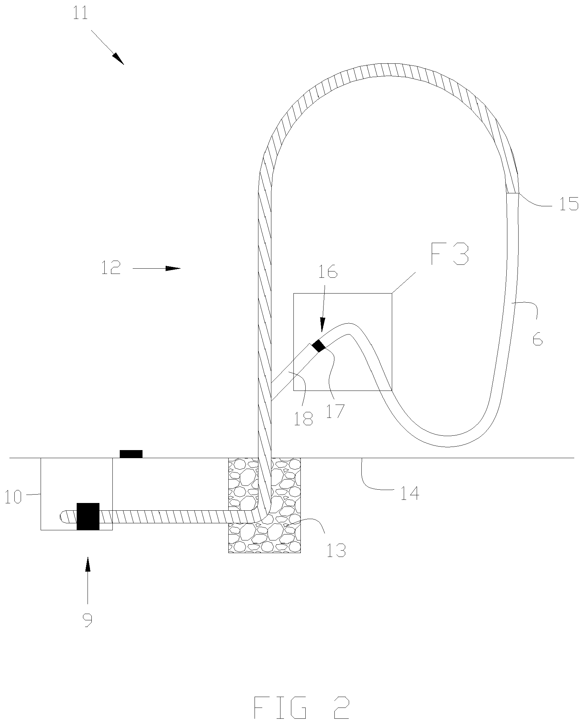

Such a branch 11 is represented in more detail in figure 2.

Naturally, other configurations are not excluded either from the invention.

In other common configurations, pipes are installed above ground on a structure or under an existing canopy or sometimes even inside a building.

On these branches 11 is further provided, in each pitch 8, a suction hose 6 of the flexible type to make it easy to vacuum inside the vehicles 5.

Every suction hose 6 is hereby connected with one far end 15 to the portion 12 of the branch 11 concerned, and every suction hose 6 is provided with a suction nozzle 17 on its other free end 16, which is preferably a crevice suction nozzle 17.

The other pipes of the pipe system 7 are preferably made of metal, although this is not strictly necessary according to the invention.

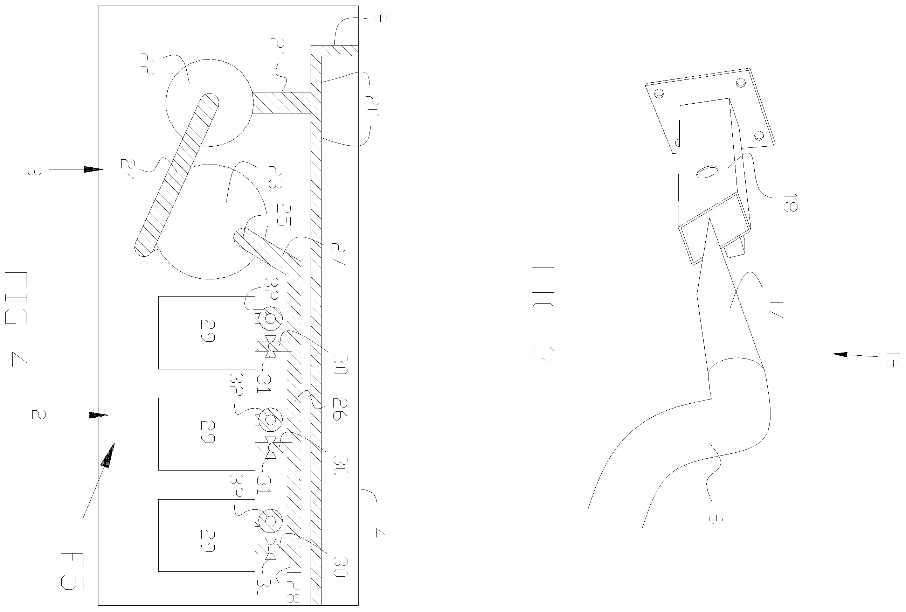

On each branch 11, more specifically on the portion 12 thereof, is also provided a suction nozzle holder 18 in each case, as is represented in more detail in figure 3.

When a suction hose 6 is not being used, the respective suction nozzle 17 must be placed in the corresponding suction nozzle holder 18, whereas vice versa, before being able to use the suction hose 6 for vacuuming, the suction nozzle 17 must be taken out of the respective suction nozzle holder 18 first.

The main pipes 9 are sealed at one far end 19 and they come together at their other far end 20 in a pipe section 21 forming the entry of the dust collection unit 3.

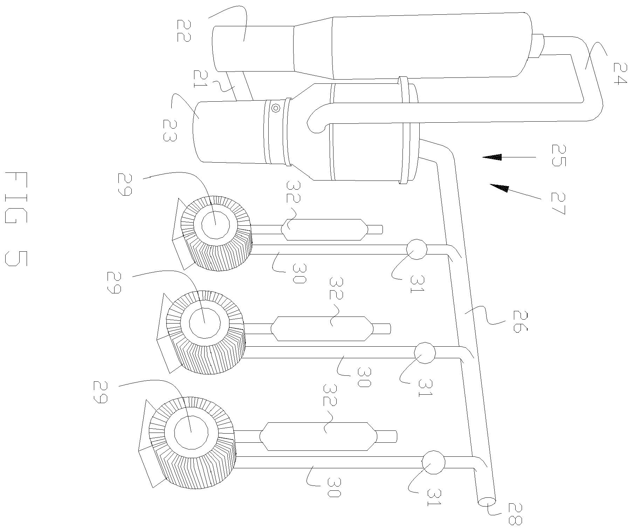

As is represented in more detail in figures 4 and 5, this dust collection unit 3 comprises a primary cyclone separator 22, as well as a filter 23 for collecting fine particles, placed in series one after the other and which are connected via a connecting pipe 24.

Embodiments without any cyclone separator 22 or with other systems for removing dust and contaminants from the sucked-in air are not excluded from the invention either.

The filter 23 is preferably a cartridge end filter 23 which is periodically cleaned by means of compressed air with a pulse jet system.

The output 25 of the filter 23 opens into a collector pipe 26 having one far end 27 which forms the input 27 of the central pump installation 2.

At its other far end 28, this collector pipe 26 is closed.

According to a preferred embodiment of a central vacuum installation 1 in accordance with the invention, the central pump installation 2 has several electrically driven vacuum pumps 29.

This is also the case in the embodiment as discussed here, whereby the central pump installation 2 is provided more specifically with three such vacuum pumps 29, which are each connected via an inlet pipe 30 to the common collector pipe 26 at the input 27 of the central pump installation 2.

Naturally, it is not excluded according to the invention to apply more or less vacuum pumps as a function of the pump capacity to be obtained.

In each inlet pipe 30 is provided an inlet valve 31 with which the passage between the collector pipe 26 and the vacuum pump 29 concerned can be opened or closed.

Further, each vacuum pump 29 also has a separate outlet pipe 32.

While using the central vacuum installation 1, air and dust or other polluting elements present in the vehicles 5 are sucked up with the aid of the vacuum pumps 29 put into operation, via the suction nozzles 17 of the suction hoses 6.

The contaminated air is purified in the dust collection unit 3 and then leaves the central pump installation 2 in a purified form via the outlet pipes 32.

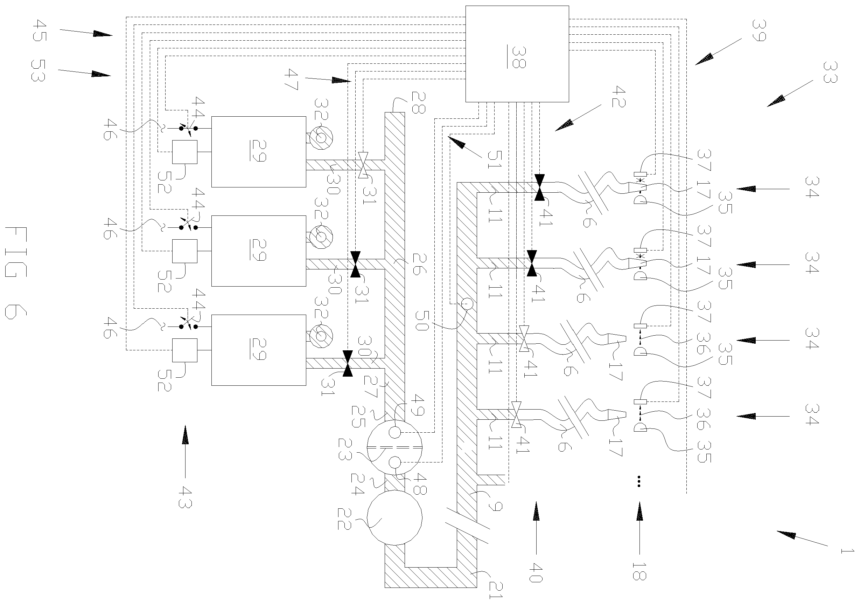

Major characteristics of a central vacuum system 1 according to the invention and its operation will be further discussed hereafter with reference to figure 6.

A first major characteristic of a central vacuum system 1 according to the invention is that it comprises a detection system 33 with which can be detected whether a suction nozzle 17 is either or not placed in its corresponding suction nozzle holder 18, in a condition of non-use and a condition of use respectively of the suction hose 6 concerned.

As is schematically represented in figure 6, this may be achieved for example by providing an infrared detector 34 on each suction nozzle holder 18, with which the presence of a suction nozzle 17 in the suction nozzle holder 18 is detected.

Such an infrared detector 34 contains an infrared transmitter 35 sending an infrared signal 36 to an infrared receiver 37.

The detection consists in measuring whether the infrared signal 36 is either or not received in the infrared receiver 37, whether it is either or not interrupted respectively by inserting the suction nozzle 17 in the suction nozzle holder 18.

Naturally, other types of detection systems 33 are not excluded either from the invention.

For example, in a possible embodiment, the infrared detector 34 is provided with photocells which simultaneously form an infrared transmitter 35 as well as an infrared receiver 37 and wherein it is detected whether the infrared signal 36 is either or not reflected on the surface of the suction nozzle 17.

Another major characteristic of a central vacuum system 1 according to the invention is that it comprises a control unit 38 which is connected to the detection system 33.

This control unit 38 is typically a PLC control unit, but it can take many different forms.

The control unit 38 may for example consist of merely electronic hardware which can automatically perform the necessary controls, but it is not excluded according to the invention for the control unit 38 to contain more sophisticated equipment such as computers and computer networks, provided with appropriate software for setting certain parameters and controlling the central vacuum system 1.

The control unit may be equipped with a control panel, provided for example with a touch screen to set certain parameters of the vacuum system 1, such as for example the required negative pressure in the pipe system 7 and the like.

In the given example, the connection between the control unit 38 and the detection system 33 is achieved by means of a wiring 39, but according to the invention this connection may for example also be obtained wirelessly.

In the embodiment shown in figure 6, the central vacuum system 1 according to the invention is further also provided with a sealing system 40 with which the air transport through each of the individual suction hoses 6 can be hermetically sealed.

Said sealing system 40 in this case contains a seal 41 for each suction hose 6, with which the suction hose 6 concerned can be hermetically sealed.

Said seal 41 may be included in the suction hose 6 itself or in a connecting part, such as for example in any part of a branch 11 of the pipe system 7.

According to a preferred embodiment and as is the case in the example discussed here, the seals 41 are controlled seals which are controlled by the control unit 38 on the basis of data derived from the detection system 33.

The connection between the sealing system 40 and the control unit is in this case established again by a wiring 42.

The seals 41 are preferably operated by means of compressed air, whereby the control unit 38 directly controls compressed air valves, provided in a compressed air pipe, and whereby opening or closing these compressed air valves results in the seal 41 concerned being opened or closed.

According to the invention it is not excluded, however, to use for example electrically controlled seals 41.

From what precedes it becomes clear that a first function of the detection system 3 consists in providing the necessary information to the control unit 38 about whether the individual suction hoses 6 are either or not in use so as to be able to control the sealing system 40 correctly.

The control unit 38 controls the seals 41 in such a manner that, upon detection of a condition wherein a suction nozzle 17 has been placed in its relative suction nozzle holder 18, more specifically when said suction hose 6 is not being used, the seal 41 which is controlled correspondingly will be closed.

This condition is illustrated for example for the two leftmost suction hoses 6 in figure 6.

Vice versa, upon detection of a condition wherein a suction nozzle 17 has been removed from its respective suction nozzle holder 18, more specifically when said suction hose 6 is in use, the control unit 38 will open the corresponding seal 41.

This is schematically represented by way of example for the two rightmost suction hoses 6 in figure 6.

Another major characteristic of a central vacuum system 1 according to the invention is that it is also provided with means to control the vacuum pumps 29 of the central pump installation 2.

The aim hereby is that the control unit 38 controls the suction force of the central pump installation 2 as a function of the number of suction hoses 6 currently being used.

On the basis of the measurements performed by the detection system 33 and following a simple calculation, the number of suction hoses 6 currently being used is known to the control unit 38.

The control unit 38 is further preferably provided with an algorithm, whereby it will activate additional vacuum pumps 29 as the number of suction hoses 6 being used increases, and whereby vice versa, the control unit 38 will switch off vacuum pumps 29 as the number of suction hoses 6 being used decreases.

For switching on and off the drive of the vacuum pumps 29, the central vacuum system 1 is provided with switching means 43.

More specifically, each vacuum pump 29 may for example include a driven circuit 44 which is controlled by the control unit 38 via a wiring 45 and with which the power supply 46 (typically the mains) of the electric drive of the respective vacuum pump 29 can be switched on or off.

Switching on or off one of the vacuum pumps 29 is preferably associated with the opening or closing of the valves 31 in the inlet pipe 30 of the vacuum pump 29 concerned, such that said vacuum pump 29 is effectively connected to the pipe system 7 or vice versa disconnected from the latter depending on the situation.

Also, in this case, these valves 31 are made as controlled valves 31 which are controlled by the control unit 38 via a wiring 47.

To illustrate this, the vacuum pump 29 which is most to the left in figure 6 is switched on and the accompanying valve 31 is opened, whereas both other vacuum pumps 29 are switched off and the accompanying valves 31 are closed.

According to the invention, the control unit 38 is preferably provided with an algorithm which makes sure that, as the number of suction hoses 6 being used increases, an additional vacuum pump 29 will be activated as soon as the already operational vacuum pumps 29 are working at a certain percentage of their maximum output, for example 80% of their maximum output.

On the other hand, the algorithm is preferably such that the control unit 38, as the number of suction hoses 6 being used decreases, will switch off one of the vacuum pumps 29, as soon as a sufficiently large negative pressure can be achieved in the pipe system 7 with the remaining switched-on vacuum pumps 29, when the latter are working at a certain percentage or less of their maximum output, for example at 80% or less of their maximum output.

Another possible characteristic of a central vacuum system according to the invention consists in that one or several pressure sensors are provided in the filter 23 of the dust collection unit 3.

In this case, two such pressure sensors 48 and 49 are provided at the filter 23, more specifically a first pressure sensor 48 in front of, i.e. upstream of the cartridge filter 23, as well as a second pressure sensor 49 following said cartridge filter 23, i.e. downstream in relation to the cartridge filter 23.

Additionally or alternatively, it is not excluded according to the invention to provide pressure sensors in other parts of the central vacuum system 1, for example in one or several suction hoses 6 or in one or several parts 9, 11, 21, 24 or 26 of the pipe system 7 or in the cyclone separator 22.

In figure 6, this is illustrated by way of example by means of an additional pressure sensor 50 provided in a main pipe 9, but many other possible configurations are not excluded either from the invention.

These pressure sensors 48 to 50 are connected to the control unit 38 by means of a wiring 49 and they generate a pressure signal for this control unit 38, which of course is a good indicator for the suction force generated by the central pump installation 2.

Also, this pressure signal can be used in an algorithm by the control unit 38, which algorithm decides on whether or not to start up or switch off one or several of the vacuum pumps 29 so as to obtain a desired negative pressure in the pipe system 7.

Preferably however, additional means are provided according to the invention with which the suction force of the vacuum pumps 29 can be controlled or adjusted very precisely.

In the case of figure 6, this is achieved by providing every vacuum pump 29 with a frequency controller 52 for controlling the rotational speed of the electric motor of the respective vacuum pump 29.

These frequency controllers 52 are controlled by the control unit 38 of the central vacuum system 1 via a wiring 53 as a function of the negative pressure to be achieved in the pipe system 7 measured with the pressure sensors 48 to 50.

According to a preferred embodiment of a central vacuum system 1 in accordance with the invention, the control unit 38, typically a PLC control unit, controls the frequency controllers by transmitting electrical pulses.

The transmission of a positive pulse results in a frequency increase in the frequency controller 52, whereas the transmission of a negative pulse results in a reduction in the frequency controller 52.

The rotational speed of the electric motors of the vacuum pumps 29 is in linear relation to the frequency of the frequency controllers 52.

The control unit 38 hereby controls the rotational speed of the vacuum pumps 29 of the central pump installation 2 on the basis of the pressure signal or the pressure signals coming from the pressure sensors 48 to 50.

Naturally, in order to change down the negative pressure measured by the pressure sensors 48 to 50 and to control the frequency controllers 52, any known control engineering method may be applied.

More specifically, when a suction hose 6 is being taken into use, a pressure sensor 48 to 50 will measure a decrease of the negative pressure in the filter 23 or the pipe system 7 or in the suction hoses 6.

Also, according to the invention, the control of the vacuum pumps 29 is preferably such that, on the basis of the corresponding pressure signal or pressure signals, the control unit 38 will increase the rotational speed of the respective vacuum motors 29 or it will switch on one or several additional vacuum motors 29 in order to compensate for the decrease of the negative pressure in the pipe system 7 with a higher suction flow rate of the central pump installation 2.

Vice versa, when a suction hose 6 is put out of use, a pressure sensor 48 will measure an increase of the negative pressure in the filter 23 or the pipe system 7 or the suction hoses 6.

Also, in this case, the control of the vacuum pumps 29 according to the invention is preferably such that, on the basis of the corresponding pressure signal, the control unit 38 will decrease the rotational speed of the relative vacuum motors 29 or it will switch off one or several additional vacuum motors 29 in order to compensate for the increase of the negative pressure in the pipe system 7 with a lower suction flow rate of the central pump installation 2.

In contrast to what is the case in the known central vacuum systems, the control unit 38 of a central vacuum system 1 according to the invention is further also such that the central pump installation 2 is turned off completely when no suction hoses 6 are being used.

This results in huge energy savings.

Furthermore, the pump capacity is proportionally or gradually increased or reduced as the number of suction hoses 6 being used increases, decreases respectively.

In practice, a possible sequence of the successive steps carried out by the control unit 38 may look for example as follows.

When a user puts a first suction hose 6 into service for vacuuming a vehicle 5 by taking its suction nozzle 17 out of the suction nozzle holder 18, this will be detected by the detection system 33, whereby a signal is transmitted to the control unit 38, which in turn reads this signal.

Based on this signal, the control unit 38 will first of all address the sealing system 40, whereby the corresponding seal 41 is opened so as to allow an air flow through the respective suction hose 6.

The control unit 38 will also switch on a first vacuum pump 29 by turning on the respective circuit 44 and it will open the corresponding inlet valve 31 in the inlet pipe 30 of the respective vacuum pump 29.

With central vacuum systems 1 which may only be used after paying a certain amount, for example at a point-of-pay terminal or a cash register, the effectively putting into use of a suction hose 6 can be made to depend on the payment, for example by providing the control unit 38 with additional control means to this end which are connected to said point-of-pay terminal or cash register.

The pressure sensors 48 to 50 measure the negative pressure in the pipe 9 and, on the basis thereof, the rotational speed of the activated vacuum pump 29 will be adjusted.

In case only one suction hose 6 is put into use, said rotational speed will be kept very low, for example typically a rotational speed corresponding to an energy consumption of the relative vacuum pump of about 2 kW.

Naturally, when one or several additional suction hoses 6 are put into use, also the respective seal or seals 41 will be opened.

This also results in a decrease of the negative pressure being measured at the filter 23 and in the main pipe 9 by the pressure sensors 48 to 50, since the rotational speed of the activated vacuum pump 29 is still low.

The control unit 38 will compensate for this decrease of the negative pressure in the pipes 9 by increasing said rotational speed by means of the frequency controller 52 of the relative vacuum pump 29, such that the same desired negative pressure is obtained again in the pipes 9 or, in other words, a suction force which is sufficient for hoovering up dust and the like in the vehicles 5.

However, as soon as the first vacuum pump 29 operates at a rotational speed which corresponds to a certain percentage of its maximum operating capacity, for example at 80 % of the maximum operating capacity, an additional vacuum pump 29 will be switched on.

On the basis of the pressure signals obtained from the pressure sensors 48 to 50, the control unit 38 will hereby control the rotational speed of the activated vacuum pumps 29 such that the activated vacuum pumps 29 operate at an identical rotational speed which is as low as possible, but in such a way that, together, they supply the required suction force again.

As more and more suction hoses 6 are put into operation, the control unit 8 will further control the suction force generated by the central pump installation 2 in a completely analogous way by increasing the rotational speeds of the activated vacuum pumps 29 or by additionally activating such a vacuum pump 29.

On the other hand, as one or several of the suction hoses 6 are deactivated, the control unit 38 will adjust the rotational speed of the relative vacuum pumps 29 to a lower rotational speed or, if this is no longer sufficient, it will switch off one or several of the vacuum pumps 29, whereas the rotational speed of the remaining vacuum pumps 29 that are still active are set at a higher rotational speed then.

Furthermore, a central vacuum system 1 according to the invention is preferably also provided with means to automatically clean the filter 23, which are controlled by the control unit 38.

The differential pressure across the filter 23 is an indication for the degree of pollution of the filter 23.

This differential pressure can be measured by the pressure sensors 49 and 50, provided upstream and downstream of the filter cartridge 23 respectively.

Thus, it is possible to provide the control unit 38 with an algorithm which consists in starting a cleaning procedure as soon as this pressure difference across the filter 2 exceeds a certain value.

This value can for example be re-entered as a parameter via a touch screen in a PLC control unit or via a computer or the like.

The cleaning procedure may consist in blowing a pulse of compressed air through the filter 23.

The invention is by no means restricted to the embodiment of a central vacuum system 1 according to the invention, described by way of example and represented in the accompanying drawings; on the contrary, such a central vacuum system 1 can be achieved in many different ways while still remaining within the scope of the invention.

## Claims

1. Central vacuum system (1) equipped with a central pump installation (2) and a dust collection unit (3), whereby several suction hoses (6) are connected to the central pump installation (2) via a pipe system (7), whereby each suction hose (6) is provided with a suction nozzle (17) at one far end (16) which, after having vacuumed with the suction hose (6) concerned, must be placed in a suction nozzle holder (18) and which, in order to be able to vacuum with the suction hose (6) concerned, must be taken out of the suction nozzle holder (18), **characterised in that** the central vacuum system (1)) contains at least the following elements:
- a detection system (33) for detecting whether a suction nozzle (17) is either or not placed in its corresponding suction nozzle holder (18), in an unused state and a used state respectively of the suction hose (6) concerned; and,
- a control unit (38) which is connected to the detection system (33) in order to know the number of suction hoses (6)) being currently used, whereby the control unit (38) controls the suction force of the central pump installation (2) as a function of the number of suction hoses (6) being currently used.

2. Central vacuum system (1) according to claim 1, **characterised in that** its control unit (38) is such that the central pump installation (2) is switched off when no suction hoses (6) are being used, and the pump capacity is proportionally or gradually increased or decreased as the number of suction hoses (6) being used increases, decreases respectively.

3. Central vacuum system (1) according to claim 1 or 2, **characterised in that** the detection system (33) comprises an infrared detector (34) at each suction nozzle holder (18), with which the presence of a suction nozzle (17) in the suction nozzle holder (18) is detected.

4. Central vacuum system (1) according to one or several of the preceding claims, **characterised in that** it contains a sealing system (40) with which the air flow through each of the individual suction hoses (6) can be hermetically sealed as separate.

5. Central vacuum system (1) according to claim 4, **characterised in that** the sealing system (40) comprises a seal (41) for each suction hose (6), with which the suction hose (6) concerned of a connecting part (11,12) of the pipe system (7) can be hermetically sealed.

6. Central vacuum system (1) according to claim 5, **characterised in that** the seals (41) are controlled seals (41) and **in that** the sealing system (40) is controlled by the control unit (38) on the basis of data derived from the detection system (33), in such a way that when a condition is detected wherein a suction nozzle (17) is placed in its respective suction nozzle holder (18), more specifically in a non-used condition of the suction hose (6) concerned, the corresponding controlled seal (41) will be closed and wherein, vice versa, when a condition is detected whereby a suction nozzle (17) is removed from its respective suction nozzle holder (18), more specifically in a used condition of the suction hose (6) concerned, the corresponding controlled seal (41) will be opened.

7. Central vacuum system (1) according to one or several of the preceding claims, **characterised in that** the central pump installation (2) contains several electrically driven vacuum pumps (29), whereby the control unit (38) will switch on additional vacuum pumps (29) as the number of suction hoses (6) being used increases, and whereby vice versa, the control unit (38) will switch off vacuum pumps (29) as the number of suction hoses (6) being used decreases.

8. Central vacuum system (1) according to one or several of the preceding claims, **characterised in that** in the dust collection unit (3) or in one or several suction hoses (6) or in one or several parts (9,11,12,21,24,26) of the pipe system (7), a pressure sensor (48-50) is provided which generates a pressure signal for the control unit (38), whereby the control unit (38) controls the rotational speed of the vacuum pumps (29) of the central pump installation (2) on the basis of this pressure signal or these pressure signals.

9. Central vacuum system (1) according to claim 8, **characterised in that** when a suction hose (6) is put into operation, a pressure sensor (48-50) will measure a decrease of the negative pressure in the pipe system (7) or the suction hoses (6) whereby, on the basis of the corresponding pressure signal or pressure signals, the control unit will increase the rotational speed of the vacuum motors (29) concerned or it will activate one or several additional vacuum motors (29) in order to compensate for the decrease of the negative pressure in the pipe system (7) with a higher suction flow rate of the central pump installation (2).

10. Central vacuum system (1) according to claim 9, **characterised in that** when a suction hose (6) is deactivated, a pressure sensor (48-50) will measure an increase of the negative pressure in the pipe system (7) or the suction hoses (6), whereby on the basis of the corresponding pressure signal or pressure signals, the control unit (38) will decrease the rotational speed of the respective vacuum motors (29) or it will switch off one or several additional vacuum motors (29) so as to compensate for the increase of the negative pressure in the pipe system (7) with a lower suction flow rate of the central pump installation (2).

11. Central vacuum system (1) according to one or several of the preceding claims, **characterised in that** the control unit (38), in case of an increase of the number of suction hoses (6) being used, will activate an additional vacuum pump (29) as soon as the already operational vacuum pumps (29) are working at 80% of their maximum output, and **in that** the control unit (38), in case of a decrease of the number of suction hoses (6) being used, will switch off one of the vacuum pumps (29) as soon as a sufficiently large negative pressure can be achieved in the pipe system (7) with the remaining switched-on vacuum pumps (29) when they are working at 80% or less of their maximum output.

12. Central vacuum system (1) according to one or several of the preceding claims, **characterised in that** the dust collection unit (3) contains a primary cyclone separator (22) as well as a filter (23) for collecting fine particles.

13. Central vacuum system (1) according to one or several of the preceding claims, **characterised in that** the central pump installation (2) contains several electrically driven vacuum pumps (29), whereby each vacuum pump (29) is provided with a frequency controller (52) for controlling the rotational speed of the respective vacuum pump (29), whereby these frequency controllers (52) are controlled by the control unit (38) of the central vacuum system (1) as a function of the negative pressure to be achieved in the pipe system (7).

14. Central vacuum system (1) according to one or several of the preceding claims, **characterised in that** the central pump installation (2) contains several electrically driven vacuum pumps (29), whereby each vacuum pump (29) can be disconnected from the pipe system (7) by means of a valve (31) which is controlled by the control unit (38) of the central vacuum system (1).

15. Use of a central vacuum system (1) according to one or several of the preceding claims in an installation for cleaning vehicles (5).

## Patentansprüche

1. Zentrales Staubsaugsystem (1), das mit einer zentralen Pumpenanlage (2) und einer Staubsammeleinheit (3) ausgerüstet ist, wobei mehrere Saugschläuche (6) mittels eines Leitungssystems (7) mit der zentralen Pumpenanlage (2) verbunden sind, wobei jeder Saugschlauch (6) an einem Ende (16) mit einer Saugdüse (17) versehen ist, die, nach dem Staubsaugen mit dem betreffenden Saugschlauch (6), in einer Saugdüsenhalterung (18) platziert werden muss und die, um mit dem betreffenden Saugschlauch (6) staubsaugen zu können, aus der Saugdüsenhalterung (18) genommen werden muss, **dadurch gekennzeichnet, dass** das zentrale Staubsaugsystem (1) mindestens die folgenden Elemente umfasst:
- ein Detektionssystem (33) zum Detektieren, ob eine Saugdüse (17) in ihrer entsprechenden Saugdüsenhalterung (18) platziert ist oder nicht, in einem nicht benutzten beziehungsweise einem benutzten Zustand des betreffenden Saugschlauchs (6); und
- eine Steuereinheit (38), die mit dem Detektionssystem (33) in Verbindung steht, um die Anzahl von Saugschläuchen (6), die aktuell benutzt werden, zu kennen, wobei die Steuereinheit (38) die Saugkraft der zentralen Pumpenanlage (2) in Funktion der Anzahl von aktuell benutzten Saugschläuchen (6) ansteuert.

2. Zentrales Staubsaugsystem (1) nach Anspruch 1, **dadurch gekennzeichnet, dass** seine Steuereinheit (38) derart ist, dass die zentrale Pumpenanlage (2) abgeschaltet wird, wenn keine Saugschläuche (6) benutzt werden, und die Pumpkapazität proportional oder schrittweise erhöht oder verringert wird, wenn sich die Anzahl von in Benutzung befindlichen Saugschläuchen (6) erhöht beziehungsweise verringert.

3. Zentrales Staubsaugsystem (1) nach Anspruch 1 oder 2, **dadurch gekennzeichnet, dass** das Detektionssystem (33) einen Infrarotdetektor (34) an jeder Saugdüsenhalterung (18) umfasst, womit das Vorhandensein einer Saugdüse (17) in der Saugdüsenhalterung (18) detektiert wird.

4. Zentrales Staubsaugsystem (1) nach einem oder mehreren der vorhergehenden Ansprüche, **dadurch gekennzeichnet, dass** es ein Verschlusssystem (40) umfasst, womit der Luftstrom durch jeden der individuellen Saugschläuche (6) separat hermetisch abgeschlossen werden kann.

5. Zentrales Staubsaugsystem (1) nach Anspruch 4, **dadurch gekennzeichnet, dass** das Verschlusssystem (40) ein Verschlusselement (41) für jeden Saugschlauch (6) umfasst, womit der betreffende Saugschlauch (6) oder ein anschließender Teil (11, 12) des Leitungssystems (7) hermetisch abgeschlossen werden kann.

6. Zentrales Staubsaugsystem (1) nach Anspruch 5, **dadurch gekennzeichnet, dass** die Verschlusselemente (41) angesteuerte Verschlusselemente (41) sind und dass das Verschlusssystem (40) durch die Steuereinheit (38) auf Basis von Daten, die von dem Detektionssystem (33) kommen, angesteuert wird, derart, dass, wenn ein Zustand detektiert wird, wobei eine Saugdüse (17) in ihrer betreffenden Saugdüsenhalterung (18) platziert ist, spezifischer in einem nicht benutzten Zustand des betreffenden Saugschlauchs (6), das betreffende angesteuerte Verschlusselement (41) geschlossen wird und wobei umgekehrt, wenn ein Zustand detektiert wird, wobei eine Saugdüse (17) aus ihrer betreffenden Saugdüsenhalterung (18) herausgenommen ist, spezifischer in einem benutzten Zustand des betreffenden Saugschlauchs (6), das betreffende angesteuerte Verschlusselement (41) geöffnet wird.

7. Zentrales Staubsaugsystem (1) nach einem oder mehreren der vorhergehenden Ansprüche, **dadurch gekennzeichnet, dass** die zentrale Pumpenanlage (2) mehrere elektrisch angetriebene Vakuumpumpen (29) umfasst, wobei die Steuereinheit (38) zusätzliche Vakuumpumpen (29) einschaltet, wenn sich die Anzahl von in Benutzung befindlichen Saugschläuchen (6) erhöht, und wobei umgekehrt die Steuereinheit (38) Vakuumpumpen (29) abschaltet, wenn sich die Anzahl von in Benutzung befindlichen Saugschläuchen (6) verringert.

8. Zentrales Staubsaugsystem (1) nach einem oder mehreren der vorhergehenden Ansprüche, **dadurch gekennzeichnet, dass** in der Staubsammeleinheit (3) oder in einem oder mehreren Saugschläuchen (6) oder in einem oder mehreren Teilen (9, 11, 12, 21, 24, 26) des Leitungssystems (7) ein Drucksensor (48-50) vorgesehen ist, der ein Drucksignal für die Steuereinheit (38) generiert, wobei die Steuereinheit (38) auf Basis dieses Drucksignals oder dieser Drucksignale die Drehzahl der Vakuumpumpen (29) der zentralen Pumpenanlage (2) regelt.

9. Zentrales Staubsaugsystem (1) nach Anspruch 8, **dadurch gekennzeichnet, dass**, wenn ein Saugschlauch (6) in Gebrauch genommen wird, ein Drucksensor (48-50) ein Absinken des Unterdrucks in dem Leitungssystem (7) oder den Saugschläuchen (6) misst, wobei die Steuereinheit, auf Basis des entsprechenden Drucksignals oder der entsprechenden Drucksignale, die Drehzahl der betreffenden Vakuummotoren (29) erhöht oder einen oder mehrere zusätzliche Vakuummotoren (29) aktiviert, um das Absinken des Unterdrucks in dem Leitungssystem (7) mit einer höheren Saugfördermenge der zentralen Pumpenanlage (2) zu kompensieren.

10. Zentrales Staubsaugsystem (1) nach Anspruch 9, **dadurch gekennzeichnet, dass**, wen ein Saugschlauch (6) deaktiviert wird, ein Drucksensor (48-50) einen Anstieg des Unterdrucks in dem Leitungssystem (7) oder den Saugschläuchen (6) misst, wobei die Steuereinheit (38), auf Basis des entsprechenden Drucksignals oder der entsprechenden Drucksignale, die Drehzahl der entsprechenden Vakuummotoren (29) verringert oder einen oder mehrere zusätzliche Vakuummotoren (29) abschaltet, um das Ansteigen des Unterdrucks in dem Leitungssystem (7) mit einer niedrigeren Saugfördermenge der zentralen Pumpenanlage (2) zu kompensieren.

11. Zentrales Staubsaugsystem (1) nach einem oder mehreren der vorhergehenden Ansprüche, **dadurch gekennzeichnet, dass** die Steuereinheit (38), im Fall eines Anstiegs der Anzahl der in Benutzung befindlichen Saugschläuche (6), eine zusätzliche Vakuumpumpe (29) aktiviert, sobald die bereits in Betrieb befindlichen Vakuumpumpen (29) auf 80% ihrer maximalen Kapazität arbeiten, und dass die Steuereinheit (38), im Fall einer Verringerung der Anzahl von in Benutzung befindlichen Saugschläuche (6), eine der Vakuumpumpen (29) abschaltet, sobald mit den restlichen, eingeschalteten Vakuumpumpen (29), wenn diese auf 80% oder weniger ihrer maximalen Kapazität arbeiten, ein ausreichend großer Unterdruck in dem Leitungssystem (7) erzielt werden kann.

12. Zentrales Staubsaugsystem (1) nach einem oder mehreren der vorhergehenden Ansprüche, **dadurch gekennzeichnet, dass** die Staubsammeleinheit (3) einen primären Zyklonabscheider (22) sowie einen Filter (23) zum Sammeln von Feinstaub umfasst.

13. Zentrales Staubsaugsystem (1) nach einem oder mehreren der vorhergehenden Ansprüche, **dadurch gekennzeichnet, dass** die zentrale Pumpenanlage (2) mehrere elektrisch angetriebene Vakuumpumpen (29) umfasst, wobei jede Vakuumpumpe (29) mit einem Frequenzregler (52) zur Regelung der Drehzahl der betreffenden Vakuumpumpe (29) versehen ist, wobei diese Frequenzregler (52) durch die Steuereinheit (38) des zentralen Staubsaugsystems (1) in Funktion des in dem Leitungssystem (7) zu erzielenden Unterdrucks angesteuert werden.

14. Zentrales Staubsaugsystem (1) nach einem oder mehreren der vorhergehenden Ansprüche, **dadurch gekennzeichnet, dass** die zentrale Pumpenanlage (2) mehrere elektrisch angetriebene Vakuumpumpen (29) umfasst, wobei jede Vakuumpumpe (29) mittels eines Ventils (31), das durch die Steuereinheit (38) des zentralen Staubsaugsystems (1) angesteuert wird, von dem Leitungssystem (7) entkoppelt werden kann.

15. Benutzung eines zentralen Staubsaugsystems (1) nach einem oder mehreren der vorhergehenden Ansprüche in einer Anlage zum Reinigen von Fahrzeugen (5).

## Revendications

1. Système d'aspiration central (1) équipé d'une installation de pompage centrale (2) et d'une unité de récolte de poussière (3) ; dans lequel plusieurs tuyaux flexibles d'aspiration (2) sont raccordés à l'installation de pompage centrale (6) via un système de canalisation (7) ; dans lequel chaque tuyau flexible d'aspiration (6) est muni d'une buse d'aspiration (17) à une extrémité éloignée (16) qui, après la mise en oeuvre d'une aspiration avec le tuyau flexible d'aspiration (6) concerné, doit être placée dans un support de buse d'aspiration (18) et qui, dans le but de pouvoir mettre en oeuvre une aspiration avec le tuyau flexible d'aspiration (6) concerné, doit être retirée du support de buse d'aspiration (18) ; **caractérisé en ce que** le système d'aspiration central (1) contient au moins les éléments suivants :
- un système de détection (33) destiné à détecter le fait de savoir si une buse d'aspiration (17) est placée ou non dans son support de buse d'aspiration (18) correspondant, dans un état d'utilisation et dans un état de non utilisation, respectivement du tuyau flexible d'aspiration (6) concerné ; et
- une unité de commande (38) qui est raccordée au système de détection (33) dans le but de connaître le nombre de tuyaux flexibles d'aspiration (6) en train d'être utilisés ; dans lequel l'unité de commande (38) commande la force d'aspiration de l'installation de pompage centrale (2) en fonction du nombre de tuyaux flexibles d'aspiration (6) en train d'être utilisés.

2. Système d'aspiration central (1) selon la revendication 1, **caractérisé en ce que** son unité de commande (38) est telle que l'installation de pompage centrale (2) est mise hors circuit lorsqu'aucun tuyau flexible d'aspiration (6) n'est en train d'être utilisé, et la capacité de pompage est augmentée ou diminuée de manière proportionnelle ou de manière progressive en fonction de l'augmentation, de la diminution respectivement, du nombre de tuyaux flexibles d'aspiration (6) en train d'être utilisés.

3. Système d'aspiration central (1) selon la revendication 1 ou 2, **caractérisé en ce que** le système de détection (33) comprend un détecteur à infrarouge (34) à chaque support de buse d'aspiration (18) avec lequel la présence d'une buse d'aspiration (17) dans le support de buse d'aspiration (18) est détectée.

4. Système d'aspiration central (1) selon une ou plusieurs des revendications précédentes, **caractérisé en ce qu'**il contient un système d'étanchéisation (40) avec lequel l'écoulement de l'air à travers chacun des tuyaux flexibles d'aspiration individuels (6) peut être fermé de manière hermétique de façon séparée.

5. Système d'aspiration central (1) selon la revendication 4, **caractérisé en ce que** le système d'étanchéisation (40) comprend un joint d'étanchéité (41) destiné à chaque tuyau flexible d'aspiration (6) avec lequel le tuyau flexible d'aspiration (6) concerné, d'un élément de raccordement (11, 12) du système de canalisation (7), peut être fermé de manière hermétique.

6. Système d'aspiration central (1) selon la revendication 5, **caractérisé en ce que** les joints d'étanchéité (41) représentent des joints d'étanchéité commandés (41), et **en ce que** le système d'étanchéisation (40) est commandé par l'unité de commande (38) sur la base de données qui dérivent du système de détection (33), d'une manière telle que, lorsqu'une condition est détectée dans laquelle une buse d'aspiration (17) est placée dans son support de buse d'aspiration respectif (18), de manière plus spécifique dans une condition de non utilisation du tuyau flexible d'aspiration (6) concerné, le joint d'étanchéité commandé correspondant (41) sera fermé, et dans lequel, vice versa, lorsqu'une condition est détectée dans laquelle une buse d'aspiration (17) est retirée de son support de buse d'aspiration respectif (18), plus spécifiquement dans une condition d'utilisation du tuyau flexible d'aspiration (6) concerné, le joint commandé correspondant (41) sera ouvert.

7. Système d'aspiration central (1) selon une ou plusieurs des revendications précédentes, **caractérisé en ce que** l'installation de pompage central (2) contient plusieurs pompes à vide (29) entraînées par voie électrique ; dans lequel l'unité de commande (38) va mettre en circuit des pompes à vide supplémentaires (29) lorsque le nombre de tuyaux flexibles d'aspiration (6) en train d'être utilisés augmente ; et dans lequel, vice versa, l'unité de commande (38) va mettre hors circuit des pompes à vide (29) lorsque le nombre de tuyaux flexibles d'aspiration (6) en train d'être utilisés diminue.

8. Système d'aspiration central (1) selon une ou plusieurs des revendications précédentes, **caractérisé en ce que**, dans l'unité de récolte de poussière (3) ou dans un ou plusieurs tuyaux flexibles d'aspiration (6) ou dans un ou plusieurs éléments (9, 11, 12, 21, 24, 26) du système de canalisation (7), est prévu un capteur de pression (48-50) qui génère un signal de pression pour l'unité de commande (38) ; dans lequel l'unité de commande (38) commande la vitesse de rotation des pompes à vide (29) de l'installation de pompage centrale (2) sur la base de ce signal de pression ou de ces signaux de pression.

9. Système d'aspiration central (1) selon la revendication 8, **caractérisé en ce que**, lorsqu'un tuyau flexible d'aspiration (6) est mis en état de marche, un capteur de pression (48-50) va mesurer une diminution de la pression négative dans le système de canalisation (7) ou dans les tuyaux flexibles d'aspiration (6) ; dans lequel, sur la base du signal de pression ou des signaux de pression correspondants, l'unité de commande va augmenter la vitesse de rotation des moteurs d'aspiration (29) concernés ou bien elle va activer un ou plusieurs moteurs d'aspiration supplémentaires (29) dans le but de compenser la diminution de la pression négative dans le système de canalisation (7) avec un débit d'aspiration supérieur de l'installation de pompage centrale (2).

10. Système d'aspiration central (1) selon la revendication 9, **caractérisé en ce que**, lorsqu'un tuyau flexible d'aspiration (6) est désactivé, un capteur de pression (48-50) va mesurer une augmentation de la pression négative dans le système de canalisation (7) ou dans les tuyaux flexibles d'aspiration (6) ; dans lequel, sur la base du signal de pression ou des signaux de pression correspondants, l'unité de commande (38) va diminuer la vitesse de rotation des moteurs d'aspiration respectifs (29) ou bien elle va mettre hors circuit un ou plusieurs moteurs d'aspiration supplémentaires (29) dans le but de compenser l'augmentation de la pression négative dans le système de canalisation (7) avec un débit d'aspiration inférieur de l'installation de pompage centrale (2).

11. Système d'aspiration central (1) selon une ou plusieurs des revendications précédentes, **caractérisé en ce que** l'unité de commande (38), dans le cas d'une augmentation du nombre de tuyaux flexibles d'aspiration (6) en train d'être utilisés, va activer une pompe à vide supplémentaire (29) dès que les pompes à vide déjà opérationnelles (29) travaillent à 80 % de leur puissance maximale ; et **en ce que** l'unité de commande (38), dans le cas d'une diminution du nombre des tuyaux flexibles d'aspiration (6) en train d'être utilisés, va mettre hors circuit une des pompes à vide (29) dès qu'une pression négative suffisamment élevée peut être atteinte dans le système de canalisation (7) avec les pompes à vide mises en circuit restantes (29) lorsque celles-ci travaillent à 80 % ou moins de leur puissance maximale.

12. Système d'aspiration central (1) selon une ou plusieurs des revendications précédentes, **caractérisé en ce que** l'unité de récolte de poussière (3) contient un séparateur à cyclone principal (22) ainsi qu'un filtre (23) destiné à la récolte des particules fines.

13. Système d'aspiration central (1) selon une ou plusieurs des revendications précédentes, **caractérisé en ce que** l'installation de pompage centrale (2) contient plusieurs pompes à vide (29) entraînées par voie électrique ; dans lequel chaque pompe à vide (29) est équipée d'un régulateur de fréquence (52) destiné à régler la vitesse de rotation de la pompe à vide respective (29) ; dans lequel ces régulateurs de fréquence (52) sont commandés par l'unité de commande (38) du système d'aspiration central (1) en fonction de la pression négative qui doit être atteinte dans le système de canalisation (7).

14. Système d'aspiration central (1) selon une ou plusieurs des revendications précédentes, **caractérisé en ce que** l'installation de pompage centrale (2) contient plusieurs pompes à vide (29) entraînées par voie électrique ; dans lequel chaque pompe à vide (29) peut être déconnectée du système de canalisation (7) au moyen d'une soupape (31) qui est commandée par l'unité de commande (38) du système d'aspiration central (1).

15. Utilisation d'un système d'aspiration central (1) selon une ou plusieurs des revendications précédentes, dans une installation destinée au lavage de véhicules (5).
